# EUROPEAN PATENT APPLICATION

(11) **EP 2 141 856 A1**
(43) Date of publication of application: **06.01.2010**
(21) Application number: 08159761.9
(22) Date of filing: 04.07.2008
(51) Int. Cl.: H04L 12/18

(54) **Method for forming an electronic group**

(71) Applicant: Nederlandse Organisatie voor toegepast-natuurwetenschappelijk onderzoek TNO, 2628 VK Delft (NL)
(72) Inventor: Klos, Victor Bastiaan, 2498 BV Den Haag (NL); Van Deventer, Mattijs Oskar, 2264 DL Leidchendam (NL)
(74) Representative: Hatzmann, Martin

(57) **Abstract**

Method for managing an electronic group comprising two or more group members (2), all members, using, at least for setting up such a new group, mobile terminals (1) which are capable to mutually exchange, via a short-range communication link (3), relevant terminal, user and/or group codes. During a group constituting session in which the members are physically in each other's vicinity, i.e. within the reach of the short-range link, at least one member of the intended group, acts as a group representative (2*) collects, via the short-range link (3), from all relevant members, their user or terminal identifiers, called member identifiers (M₁, M₂, M₃, etc.). A group token (T) is constituted by the group representative (2*) or his/her terminal, including a group identifier (A), the latter being transmitted, via the short-range link, to all members. After the group constituting session the group representative contacts, via any communication link (4), a group facilitating server (6) and stores into it said group token (T), including the group identifier (A) and all relevant member identifiers (M₁, M₂, M₃, etc.).

## Description

The present invention refers to a method for managing an electronic group comprising several, i.e. two or more, group members.

Electronic communities may be defined as groups of people (or in general "entities") that use "electronic" means, i.e. nowadays Information and Communications Technology (ICT) means, to collaborate within a group. Typical applications of electronic communities are
- Shared work space(s) on a file server
- Shared e-mail account(s)
- Shared electronic agenda(s)
- Shared address book(s)
- Shared document(s)
- Shared application(s)
- Shared intranet(s)
- Etc.

The term "electronic" is used to indicate that the group, e.g. to be established for a longer period of time, is independent of the location of the participants. Here are some examples of such communities, which also may be called "electronic groups", "collaboration groups" etc. (however, the concept of "electronic group" will be used as a rule hereinafter):
- A department of a company
- A project within a company
- A collaboration between people of different companies
- A course with students and teachers
- A homework group
- A virtual reality gaming group

At present the formation of a new electronic group is rather cumbersome. When a group of people gathers in a meeting, say a new project team, then the real group is already there. However, many steps are needed to turn the ad-hoc real group into an electronic one:
- The group leader needs to create (register) the electronic group.
- The group leader needs to select and authorize each of the group members.
- The group leader needs to inform each of the members of the created group.
- Each of the members may have to perform further administrative activities.
All of these activities often require the invocation of experts of the IT helpdesk.

Also joining (or registering to) an existing electronic group is rather cumbersome. When a potential new member meets the group leader in person, the group leader can decide to accept the new member. However, also then many steps are needed.
- The new member may send an electronic membership application to the group leader.
- The group leader has to authorize the new member.
- The new member has to be informed about the accepted authorization.
Again, these activities often require the invocation of the IT helpdesk.

One aim of this invention is to enable registering to an electronic group during a physical meeting of its (future) group members, e.g. to enable (electronic) follow up (inter)actions of the group/group. Another aim of the invention is to provide more efficient creation and management of an electronic group/group.

According to the present invention a method is proposed for managing an electronic group comprising two or more group members, all members, using, at least for setting up such a new group, mobile terminals which are capable to mutually exchange, via a short-range communication link, relevant terminal, user and/or group codes, the method comprising next steps:
a. during a group constituting session in which the members are physically in each other's vicinity, i.e. within the reach of the short-range link, at least one member of the intended group, acting as a group representative (2*) collects, via the short-range link (3), from all relevant members, their user or terminal identifiers, called member identifiers (M₂, M₃, etc.) hereinafter (Note: M₁ is supposed to belong to the group representing member who thus needs not to collect M₁ from another member via the short-range link);
b. a group token (T) is constituted by the group representative (2*) or his/her terminal, including a group identifier (A), the latter being transmitted, via the short-range link, to all members;
c. after the group constituting session the group representative contacts, via any communication link (4), a group facilitating server (6) and stores into it said group token (T), including the group identifier (A) and all collected member identifiers (M₁, M₂, M₃, etc.).

Said shorter and in less formal wordings, a group may be constituted by collecting, e.g. via smart phones and e.g. Bluetooth, Infrared (IR) etc., identifiers of the members when they are (still) in each other's vicinity, e.g. during a ("live") meeting. One group member may act as an (ad hoc or as a more or less permanent) group representative, who provides a group identifier (A) and the required member identifiers (M₁, M₂, M₃, etc.) and who transmits them after the "live" meeting, e.g. via a (mobile) Internet path, from his/her smart phone to a group facilitating server, to be registered as group token (T), thus enabling an electronic group, the members of which can communicate and/or exchange information via their smart phones (e.g. via the Internet) and/or other terminals, like laptops, desktops, Personal Digital Assistants (PDA) etc. It is presumed that the same identifiers should be used for access to the server as the codes collected in the group constitution phase, which codes of course could be changed afterwards in any conventional way.

New members can be added to the group either via any conventional process (e.g. via a wired or mobile network e.g. the Internet) or in a way which is similar to the new group forming process according to the invention as outlined above.

The method according to the invention has the following advantages over using conventional network-based communications:
- Setting up the communication is simpler
   ○ Network-based communication would require the typing in of phone numbers, email addresses or other identifiers.
   ○ Short range communication, on the contrary, is simply set up by selecting the communication partner from a short list of other in the immediate vicinity.
- The locality (due to the short-range path used to setup the group) offers a good basic level of security
   ○ Only people in the immediate vicinity can set up the communication.
   ○ This matches perfectly with the physical group.
- No (long range) network (e.g. Internet) coverage is needed
   ○ All of the essential electronic-group creation tasks can be handled locally.

The invention includes the method outlined above, a system arranged to perform this novel method, as well as software means which are arranged to control and/or perform this novel method, which software means may be distributed over several components of said system.

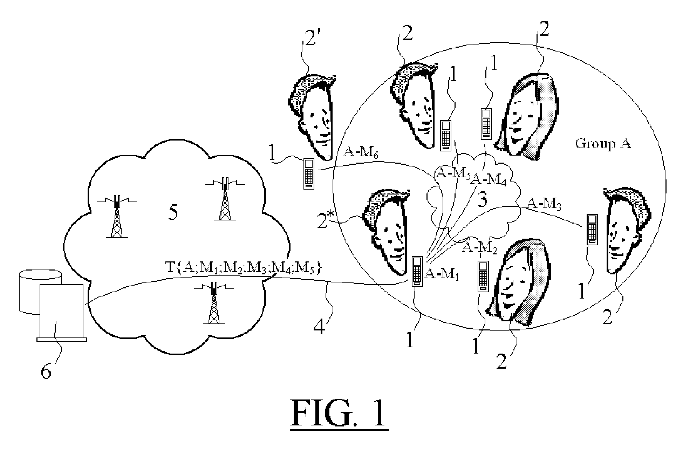

Figure 1 shows a schematic and exemplary architecture which can be used to perform the method according to the invention.

Such exemplary architecture arranged for performing the method according to the invention preferably comprises the following elements:
- Smart phones 1
   ○ All (aspirant) members 2, incl. (at least) one of them acting as group representative 2* (who also may be called group leader) have smart phones 1.
   ○ The smart phones support at least one short-range communication technology, like Bluetooth, infrared (IR), Wi-Fi etc., indicated by short-range links 3.
   ○ The smart phones (at least the one of the group representative) preferably support at least one network-based communication technology, like GPRS, UMTS, EDGE, HSDPA, Ethernet, Token Ring, or other, indicated by a network-based link 4.
   ○ The smart phones are used to create or join an electronic group.
- Communication network 5
   ○ E.g. GPRS, UMTS, EDGE, HSDPA, ...
- Group (facilitating) server 6
   ○ This is any server/service arranged to facilitate the creation and management of electronic communities.

Figure 1 shows a group of persons, desiring to form an electronic group A, comprising five group members (2). All members use mobile terminals (1) which are capable to mutually exchange, via a short-range communication link (3), e.g. Bluetooth, relevant terminal, user and/or group codes. During a group constituting session, in which the members are physically in each other's vicinity, i.e. within the reach of the short-range link, at least one member of the intended group, acting as a group representative (2*) collects, e.g. using a "Bluetooth Teaming" (BTT) software program, using the short-range link (3), from all other members, their user or terminal identifiers, called member identifiers (M₂, M₃, etc.) hereinafter (M₁ is already known by the group representative). The BTT program generates a group token (T) in the terminal of the group representative (2*), which token includes a group identifier (A) and all member identifiers (M₁, M₂, M₃, etc.). At least the group identifier is transmitted, via the short-range link, to each group member. For security and/or management reasons it may be preferred to transfer the identifiers of the group representative (2*) and/or all group members (2) as well. The group token (T) may thus include the group identifier (A) and e.g. all member identifiers (M₁, M₂, M₃, etc.).

After the group constituting session all group members may go their own way, thus becoming located outside the reach of the short-range (Bluetooth) "ad hoc network" which was set up when the members were in each other's vicinity, e.g. within the same room or location, in order to exchange the identifiers for setting up the intended (e.g. collaboration) group. So, after everyone has gone his/her own way, the group representative (2*) - who is at least temporarily responsible for forming the (new) group - contacts, via any communication link (4) - e.g. a wireless or wired, short-range or long-range, public or non-public network (5) - a group facilitating server (6) and stores there the group token (T), including the group identifier (A) and all collected member identifiers (M₁, M₂, M₃, etc.).

After the group (A) has been registered in the server (the group defined by its token T, comprising a group identifier A and its member identifiers M₁, M₂, M₃, etc.), each member may use the group facilities to keep in touch with one another via any network, e.g. via a LAN, Intranet, Internet etc., e.g. for sharing work space on a file server, e-mail accounts, electronic agendas, address books, documents, application etc., all this under control of the group data, i.e. the group token, registered in the group server. Further, each group member may activate in his/her mobile device an application which "sniffs" - e.g. via Bluetooth - whether there are other group members in the neighbourhood. The mobile device may either continuously or periodically broadcast e.g. the relevant group identifier (A), which can be picked up by the mobile devices of other group members, and/or the device may "listen" - e.g. via Bluetooth - whether other mobile devices broadcast such group identifier. In that way group members will be able to be notified when another group member is in the vicinity. This mechanism may be performed for several groups (A, B, C, etc.) to which a user has been registered as a member.

When a new member 2' is permitted to join the (existing) group next steps may performed when the new group member is physically in the vicinity, i.e. within the reach of the short-range link, of any group representative, who may be - but doesn't have to be - the same person as the group representative acting in the group forming stage as outlined above. This group representative collects, again via a short-range link (3), from the new members, his/her user or terminal identifier, acting as his/her member identifier (M₅), after which the group representative transmits the relevant group identifier (A), via the short-range link, to the new member. Finally, the group representative contacts, via any communication link (4), the group facilitating server (6) and adds the collected member identifier (M₅) of the new member to the group token (T) of the relevant group, after which the new member has become a member of the group. The group token (T) will thus be extended with the member identifier (M₅) of the new group member.

## Claims

1. Method for managing an electronic group comprising two or more group members (2), all members, using, at least for setting up such a new group, mobile terminals
(1) which are capable to mutually exchange, via short-range communication links (3), relevant terminal, user and/or group codes, the method comprising next steps:
a. during a group constituting session in which the members are physically in each other's vicinity, i.e. within the reach of a short-range link, at least one member of the intended group, acting as a group representative (2*) initiates the group by defining a group identifier (A) and making it available to the other members of the intended group via the short-range links (3).
b. the group representative (2*) collects from all relevant members, including him/herself, their user or terminal identifiers, called member identifiers (M₁, M₂, M₃, etc.) hereinafter, via the short-range links (3);
c. one or multiple group tokens (T₁, T₂, ...) are constituted by the group representative (2*) or his/her terminal, including identification of the group representative, a group identifier (A) and member identifiers;
d. after the group constituting session the group representative contacts, via any communication link (4,5), a group facilitating server (6) and stores into it said group token or tokens (T1, T2, ...), including the group identifier (A) and all member identifiers (M₁, M₂, M₃, etc.) belonging to that group.

2. Method according to claim 1, where, for registering at least one new member to the group by means of his/her mobile terminal which is capable to mutually exchange, via a short-range communication link (3), relevant terminal, user and/or group codes, with any member of the existing group, acting as a group representative, the method comprising next steps:
a. during the registering session in which both existing and prospect members are physically in each other's vicinity, i.e. within the reach of the short-range link, the existing member acting as group representative makes available the group identifier A to prospect members, via a short-range link (3);
b. the group representative collects, from the new member(s), his/her user or terminal identifier, called member identifier (M5) hereinafter, via a short-range link (3);
c. one or multiple group tokens (T3, T4, ...) are constituted by the group representative or his/her terminal, including identification of the group representative , the group identifier (A) and member identifiers;
d. after this session the group representative contacts, via any communication link (4, 5), the group facilitating server (6) and adds the additional tokens (T3, T4, ...) of the relevant group.

3. Method according to claim 2, group member acting as group representative for adding a new member to an existing group being the same member as the group member (2*) acting as group representative for the constitution of a new group.

4. Method according to claim 2, group member acting as group representative for adding a new member to an existing group being not the same member as the group member (2*) acting as group representative for the constitution of a new group.

5. Method according to claim 1 or 2, in which step 1 is achieved by the terminal of the relevant group representative continuously or periodically broadcasting the group identifier (A), and in which step 2 is achieved by the (terminals of) prospect members setting up communication with the group representative as a response to that broadcast.

6. Method according to claim 1 or 2, in which step 1 is achieved by the terminal of the group representative continuously or periodically listening for incoming requests, (the terminals of) prospect members sending out requests, and the terminal of the group representative responding with the group identifier (A), and in which step 2 is achieved in a continuation of the communication set up in step 1.

7. Method according to claim 1 or 2, wherein multiple group representatives of different groups can be present in the vicinity of the prospect member, and the prospect member is enabled to make a selection of the group(s) that he/she intends to join.

8. Method according to any preceding claim, wherein the group representative is given the option to accept or reject submitted prospect members.

9. Method according to any preceding claim, wherein authentication steps are included to validate the authenticity of the group identifier (A) and/or the member identifiers (M1, M2, M3, etc.).

10. Method according to any preceding claim, wherein encryption steps are included to protect the contents of the information exchange between group representative and prospect member(s).

11. Method according to any preceding claim, wherein the group token(s) are encrypted to protect their contents from inadvertently being disclosed to or modified by a third party.

12. Method according to any preceding claim, wherein the group token(s) Tx optionally include one or more of the following information elements:
- time stamp(s), identifying the time of the generation of (elements of) the token
- authentication information to authenticate elements of the token
- encryption to encrypt the contents of the token
- expiration time information to indicate the time until which the token remains valid.

13. Software and/or hardware means arranged for performing the method according to any preceding claim.
